# EUROPÄISCHE PATENTANMELDUNG

(11) **EP 3 070 690 A1**
(43) Veröffentlichungstag der Anmeldung: **21.09.2016**
(21) Anmeldenummer: 16164729.2
(22) Anmeldetag: 03.09.2007
(51) Int. Cl.: G07F 7/10, G06Q 20/34

(54) **CHIPKARTE UND VERFAHREN ZUR SOFTWAREBASIERTEN MODIFIKATION EINER CHIPKARTE**

(30) Priorität: 12.09.2006 DE 102006042723
(62) Teilanmeldung aus: 07803158.0
(71) Anmelder: Vodafone GmbH, 40549 Düsseldorf (DE)
(72) Erfinder: DOHMANN, Dierk, 40547 Düsseldorf (DE); FAMULLA, Frank, 40237 Düsseldorf (DE)
(74) Vertreter: Müller & Schubert

(57) **Zusammenfassung**

Die vorliegende Erfindung betrifft eine Chipkarte, insbesondere eine Smartkarte, mit einem auf der Chipkarte implementierten Betriebssystem, welches die Funktionen der Chipkarte steuert, und mit einer ersten Betriebssystemkernelebene, die den Kern des Betriebssystems darstellt und in der die Prozess- und Datenorganisation des Betriebssystems festgelegt ist, bei der eine zweite, einheitliche Betriebssystemkernelebene vorgesehen ist, in welcher solche Funktionen der ersten Betriebssystemkernelebene definiert sind, die von außerhalb des Betriebssystems adressierbar sind, und dass eine Schnittstelle zum Zugriff von außerhalb des Betriebssystems auf die zweite einheitliche Betriebssystemkernelebene vorgesehen ist. Ferner betrifft die Erfindung ein Verfahren zur softwarebasierten Modifikation einer derartigen Chipkarte.

## Beschreibung

Die vorliegende Erfindung betrifft eine Chipkarte, insbesondere eine Smartkarte, mit einem auf der Chipkarte implementierten Betriebssystem, welches die Funktionen der Chipkarte steuert, und mit einer ersten Betriebssystemkernelebene, die den Kern des Betriebssystems darstellt und in der die Prozess- und Datenorganisation des Betriebssystems festgelegt ist. Ferner betrifft die Erfindung ein Verfahren zur softwarebasierten Modifikation einer Chipkarte, insbesondere einer Smartkarte, mit einem auf der Chipkarte implementierten Betriebssystem, welches die Funktionen der Chipkarte steuert, und mit einer ersten Betriebssystemkernelebene, die den Kern des Betriebssystems darstellt und in der die Prozess- und Datenorganisation des Betriebssystems festgelegt ist.

Seit einiger Zeit schon werden Chipkarten im täglichen Leben eingesetzt. Chipkarten, oft auch als Smartcards oder Integrated Circuit Cards (ICC) bezeichnet, sind spezielle Plastikkarten mit eingebautem Chip, der eine Hardware-Logik, einen Speicher oder auch einen Mikroprozessor aufweist. So finden Chipkarten unter anderem in Form von SIM-Karten (SIM = Subscriber Identity Module) oder USIM-Karten (USIM = Universal Subscriber Identity Module) ihren Einsatz, wobei sie in ein Mobiletelefon eingesteckt werden und zur Identifikation des Nutzers im Kommunikationsnetz dienen.

Mittlerweile werden die Prozessoren in den Chipkarten immer leistungsfähiger und dadurch auch freundlicher in der Programmierung. Seit einigen Jahren existieren sogenannte Javakarten, wobei die Prozessoren in Javakarten, einen Interpreter für in Java geschriebene Anwendungen besitzen. Damit rückt die Chipkarte aus der Ecke der schwer zu programmierenden Hardware-Plattformen und gewinnt in Zukunft immer mehr an Bedeutung.

Grundsätzliche Aufgabe einer Chipkarte ist das Speichern, Verwalten und schnelle zur Verfügung stellen von Datenmengen, wobei der Unterschied zu anderen Speichermedien darin besteht, dass eine Chipkarte die Daten vor Veränderung und sehr oft auch gegen deren bloßes Auslesen schützt. Dies wird erreicht, indem der Zugriff auf den internen Speicher der Karte nicht direkt nach außen zugänglich gemacht wird, sondern nur über eine dazwischen geschaltene Instanz möglich ist, die sämtliche Zugriffe darauf nur nach Authentifizierung und bei ausreichender Berechtigung gestattet. Diese Instanz ist entweder in Form einer speziellen Programmlogik ausgeführt oder durch die Software eines Mikroprozessors, je nach Komplexität der Aufgabe.

Dies bedeutet, dass Chipkarten nicht einfach auf anbieterspezifische Bedürfnisse verändert bzw. einheitlich ausgelesen werden können. So stößt beispielsweise ein Anbieter eines Telekommunikationsnetzes, insbesondere eines Mobilfunknetzes, bei der Entwicklung einer einheitlichen anbieterspezifischen Chipkarte auf Schwierigkeiten, wenn das Ausgangsprodukt, die Chipkarte, von unterschiedlichen Herstellern hergestellt wird.

So existieren zurzeit zwei Methoden der Entwicklung einer einheitlichen anbieterspezifischen Chipkarte.
Zum einen kann ein einheitliches kompatibles Chipkartenbetriebsystem entwickelt werden und auf allen Chipkarten unterschiedlicher Hersteller implementiert werden. Dies hat zwar den Vorteil, dass eine exakte Kommunikationskenntnis zwischen dem Chip bzw. der Hardware und dem Betriebssystem der Chipkarte vorhanden ist, wodurch die Chipkarten zu 100% kompatibel sind. Allerdings besteht der Nachteil, dass die Entwicklung eines einheitlichen kompatiblen Chipkartenbetriebsystems sehr aufwendig und kostenintensiv ist. Ferner ist nachteilig, dass ein Fehler im einheitlichen kompatiblen Chipkartenbetriebsystem dazu führen würde, dass alle Chipkarten betroffen wären.
Zum anderen besteht die Möglichkeit, dass ein Anbieter von Chipkarten kompatible Anforderungen hinsichtlich des Betriebssystems der Chipkarten den verschiedenen Herstellern vorschreibt. Dies hätte zwar den Vorteil, dass ein Fehler in einem Betriebssystem eines Herstellers nicht dazu führt, dass alle Chipkarten betroffen sind. Durch die Streuung der Herstellung der Chipkarten auf mehrere Hersteller ist die Chance größer, dass zumindest ein Teil der Chipkarten voll funktionsfähig bleibt. Allerdings besteht für den Anbieter der Chipkarten, beispielsweise ein Anbieter/Betreiber eines Kommunikationsnetzes, ein enormer Aufwand die Chipkarten unterschiedlicher Hersteller auf Einheitlichkeit zu testen. Ferner kennt der Anbieter der Chipkarten dann nicht genau, wie der Zugriff des Betriebssystems auf den Chip bzw. die Hardware erfolgt.

Die Aufgabe der vorliegenden Erfindung ist es, eine Chipkarte der eingangs genannten Art derart weiterzubilden, dass eine Interoperabilität der Chipkarte, insbesondere deren Funktionen, gewährleistet ist, so dass eine herstellerunabhängige Modifizierung des Betriebssystems der Chipkarten ermöglicht wird. Ferner soll ein Verfahren zur softwarebasierten Modifikation einer Chipkarte der eingangs genannten Art geschaffen werden, durch welches eine Interoperabilität der Chipkarte gewährleistet wird und welches eine herstellerunabhängige
Modifizierung des Betriebssystems der Chipkarten ermöglicht.

Diese Aufgaben werden erfindungsgemäß durch eine Chipkarte mit den Merkmalen gemäß dem unabhängigen Patentanspruch 1 sowie durch ein Verfahren zur softwarebasierten Modifikation einer Chipkarte mit den Merkmalen gemäß dem unabhängigen Patentanspruch 12 gelöst. Weitere Vorteile, Merkmale, Details, Aspekte und Effekte der Erfindung ergeben sich aus den Unteransprüchen sowie der Beschreibung. Merkmale und Details, die im Zusammenhang mit der erfindungsgemäßen Chipkarte gemäß Patentanspruch 1 beschrieben werden, gelten dabei selbstverständlich auch im Zusammenhang mit dem erfindungsgemäßen Verfahren zur softwarebasierten Modifikation einer Chipkarte gemäß Patentanspruch 12, und umgekehrt.

Die Aufgabe wird gemäß dem ersten Aspekt der Erfindung durch eine Chipkarte, insbesondere durch eine Smartkarte, mit einem auf der Chipkarte implementierten Betriebssystem, welches die Funktionen der Chipkarte steuert, und mit einer ersten Betriebssystemkernelebene, die den Kern des Betriebssystems darstellt und in der die Prozess- und Datenorganisation des Betriebssystems festgelegt ist, wobei eine zweite einheitliche Betriebssystemkernelebene vorgesehen ist, in welcher solche Funktionen der ersten Betriebssystemkernelebene definiert sind, die von außerhalb des Betriebssystems adressierbar sind, und wobei eine Schnittstelle zum Zugriff von außerhalb des Betriebssystems auf die zweite, einheitliche Betriebssystemkernelebene vorgesehen ist, gelöst.

Eine derartige Chipkarte ermöglicht eine Interoperabilität der Funktionen der Chipkarte, so dass eine herstellerunabhängige Modifizierung des Betriebssystems der Chipkarten ermöglicht wird. Interoperabilität ist hierbei die Fähigkeit unabhängiger, heterogener Betriebssystemkernelebenen, möglichst nahtlos zusammen zu arbeiten, um Informationen und Daten auf der Chipkarte auf effiziente und verwertbare Art und Weise auszutauschen bzw. dem Benutzer zur Verfügung zu stellen, ohne dass dazu gesonderte Absprachen zwischen den Betriebssystemkernelebenen notwendig sind. Die Interoperabilität der Funktionen der Chipkarte wird dadurch gewährleistet, dass die Betriebssystemkernelebenen dasselbe Dateiformat bzw. dieselben Protokolle verwenden.

Ein Betriebssystemkernel steuert auf der so genannten "Low Level Ebene" den Chip und dessen Funktionen, vergleichbar in der PC-Welt mit dem BIOS. Die Befehle und Funktionen des Betriebssystemkernels können je nach Chip und Hersteller unterschiedlich ausfallen.

Eine derartige erfindungsgemäße Chipkarte ermöglicht es einem Anbieter von Chipkarten sein eigenes Betriebssystem, welches die grundlegenden Funktionen des Chips der Chipkarte steuert, wie z.B. das Speichermanagement, zu implementieren. Die Funktionen der Chipkarte setzten zumeist direkt auf dem Betriebssystemkernel auf und können beispielsweise nicht durch eine so genannte Anwendungsebene erreicht werden. D.h., die grundlegenden Funktionen einer Chipkarte werden durch das vom Hersteller vorgegebene Betriebssystem der Chipkarte verwaltet. Das Betriebssystem stellt eine Software dar, die die Kommunikationen zwischen einem Nutzer und dem Chip der Chipkarte verbessert, erweitert, vereinfacht und kontrolliert. Um die Kommunikation mit dem Chip zu realisieren, benutzt das Betriebssystem das Betriebssystemkernel. Das Betriebssystemkernel verwaltet die proprietären und rudimentären Befehle, die von dem Hersteller des Chips der Chipkarte entwickelt worden sind, um dem Chip zu kontrollieren. Das Betriebssystemkernel erlaubt den vollen Zugriff zu dem Chip der Chipkarte, wobei das Betriebssystem in der Regel derart von den Herstellern entwickelt wird, dass aus Sicherheitsaspekten einige Funktionen für den Nutzer nicht zugänglich sind.

Bei der erfindungsgemäßen Chipkarte ist eine zweite einheitliche Betriebssystemkernelebene, in welcher solche Funktionen der ersten Betriebssystemkernelebene definiert sind, die von außerhalb des Betriebssystems adressierbar sind, und eine Schnittstelle zum Zugriff von außerhalb des Betriebssystems auf die zweite einheitliche Betriebssystemkernelebene vorgesehen. Durch die zweite einheitliche Betriebssystemkernelebene wird es einem Anbieter der Chipkarte ermöglicht, auf die vom Hersteller der Chipkarte definierten Funktionen in der ersten Betriebssystemkernelebene, die den Kern des Betriebssystems darstellt und in der die Prozess- und Datenorganisation des Betriebssystems festgelegt sind, zuzugreifen. Die zweite einheitliche Betriebssystemkernelebene ermöglicht ein einheitliches Durchreichen von Funktionen der ersten Betriebssystemkernelebene. Ferner eröffnet die zweite einheitliche Betriebssystemkernelebene für den Anbieter der Chipkarte die Möglichkeit einzelne ausgewählte Funktionalitäten selbst zu definieren. D.h., die zweite einheitliche Betriebssystemkernelebene ermöglicht bevorzugt den vollen Zugriff auf die erste Betriebssystemkernelebene, um den Chip zu kontrollieren. Die Schnittstelle ermöglicht den Zugriff auf die zweite einheitliche Betriebssystemkernelebene und dadurch auf das Betriebssystem der Chipkarte. Dies bedeutet, die Schnittstelle realisiert den interoperablen Zugang zu den herstellereigenen Betriebssystemfunktionen, welche dann durch interoperable Anwendungen bzw. Funktionalitäten genutzt werden können. Die Schnittstelle beinhaltet interoperabel definierte Regeln, Variablen und Logiken, um den Chip der Chipkarte zu kontrollieren.

Die Vorteile einer derartigen Chipkarte liegen darin, dass das Betriebssystem des Herstellers der Chipkarte auf ein Minimum reduziert werden kann. Durch die Implementierung der zweite einheitliche Betriebssystemkernelebene, einschließlich deren Funktionalität, können Anbieter der Chipkarten, wie beispielsweise Mobilfunknetzbetreiber, die Chipkarten durch verschiedene Hersteller herstellen lassen. Die zweite einheitliche Betriebssystemkernelebene kann dabei nachträglich in die Chipkarte implementiert werden. Auf diese Art und Weise erhält der Anbieter der Chipkarte einen eigenen Zugriff auf das Betriebssystem und kann Fehler des Betriebsystems nachträglich korrigieren bzw. neue Merkmale in das Betriebssystem einfügen. Dies kann beispielsweise einfach über eine Funkschnittstelle erfolgen. Der Anbieter der Chipkarte erhält durch die Implementierung der zweiten einheitlichen Betriebssystemkernelebene auf Chipkarten, insbesondere von unterschiedlichen Herstellern, die Möglichkeit eines herstellerunabhängigen Zugriffs auf das Betriebssystem bzw. auf die Funktionalitäten des Betriebssystems. Er kann beispielsweise durch die Implementierung der zweite einheitliche Betriebssystemkernelebene unterschiedliche Chipkarten immer gleich auslesen.

Bevorzugt ist eine Chipkarte, bei der die Schnittstelle im Betriebssystem der Chipkarte implementiert ist. Hierdurch kann der Anbieter der Chipkarten direkt auf das Betriebssystem der Chipkarten zugreifen. Die Implementierung der Schnittstelle im Betriebssystem ermöglicht einen Zugriff von Außen auf das Betriebssystem bzw. die Funktionalitäten des Betriebssystems. Hierdurch ist bereits durch den Hersteller der Chipkarte ein Zugriff über die Schnittstelle auf das Betriebssystem vorgegeben. Dies ermöglicht es einer weiteren Person, insbesondere dem Anbieter eines Telekommunikationsnetzes, eine eigene Betriebssystemkernelebene mit einem Zugriff auf das Betriebssystem in der Chipkarte zu implementieren. Durch den Zugriff auf das vom Hersteller der Chipkarte vorgegeben Betriebssystem kann der Zugreifende sozusagen ein eigenes Betriebsystem definieren.

Durch die erfindungsgemäße Chipkarte können beispielsweise vom Anbieter eines Telekommunikationsnetzes Betriebssystemfunktionen einmal entwickelt werden und über die Schnittstelle auf unterschiedlichen Chipkarten ausgeführt werden. Auf diese Weise kann von Außen auf das Betriebssystem zugegriffen werden und ein neues von Außen adressierbares Virtuelles Betriebssystem geschaffen werden.

Bevorzugt ist ferner eine Chipkarte, bei der ein adressierbarer Switch in dem Betriebssystem, insbesondere in der zweiten einheitlichen Betriebssystemkernelebene, vorgesehen ist. Dieser Switch stellt eine Art Schalter dar, durch den eine Umschaltung dahingehend erfolgen kann, ob eine Betriebsystemfunktion auf der Basis des Betriebssystems des Herstellers der Chipkarte oder auf Basis eines über die Schnittstelle implementierten Virtuellen Betriebssystems ausgeführt werden soll. Dieser Switch ist adressierbar, um zu definieren, ob eine Betriebssystemfunktion auf Basis des Virtuellen Betriebsystems oder des von Hersteller der Chipkarte vorgegebenen Betriebssystems auszuführen ist. Für den Fall, dass über das Virtuelle Betriebssystem Zugriff auf die Funktionalitäten des Chips der Chipkarte erfolgt, deaktiviert das vom Hersteller vorgegebene Betriebssystem seine eigene Betriebssystemfunktionalitäten, die die gleichen rudimentären Kommandos benutzen. Falls einige Funktionalitäten des Virtuellen Betriebssystems gelöscht werden, die auf die Funktionalitäten des Chips zugreifen, aktiviert das Betriebssystem seine eigenen Betriebssystemfunktionalitäten, die die gleichen rudimentären Kommandos benutzen. Hierzu ist der adressierbare Switch, auch als Switchlogic bezeichnet, in dem Betriebsystem implementiert.

Eine Chipkarte die Chipkarte javabasiert ist, die zumindest eine Java Virtual Maschine und die eine Java-Applikationsebene aufweist, hat den Vorteil, dass auf zumindest einige Betriebssystemkernelfunktionen zugegriffen werden kann. Durch eine Java Virtual Machine wird die Steuerung der Betriebssystemkernelfunktionen zu einer Applikationsebene vereinheitlicht. D.h., die erste Betriebssystemkernelebene ist bei dem Chip der Chipkarten unterschiedlich, während die Applikationsebene gleich ist. Applikationsentwickler können die Applikationsebene zur Entwicklung von Applikationen im Rahmen der Funktionen, die die Java Virtual Machine bietet, nutzen. D.h., durch die Java Virtual Machine können Applikationen auch auf anderen Chips von anderen Herstellern laufen.

Die zweite einheitliche Betriebssystemkernelebene definiert genau, welche Funktionen des Betriebssystemkernels später auf der Applikationsebene adressierbar sein sollen, wobei die zweite einheitliche Betriebssystemkernelebene neben der Java Virtual Machine existieren oder sogar einige deren Funktionen, z.B. das Lesen/Schreiben eines Buffers, mit abdecken kann.
Insbesondere sind alle Betriebssystemkernelfunktionen, die ein Betriebssystem verwendet, wie z.B. Defragmentierungsbefehle für das Speichermanagement, in der zweiten einheitlichen Betriebssystemkernelebene zu definieren und zu vereinheitlichen.

Durch die Anwendungsebene, die über die Schnittstelle auf die zweite einheitliche Betriebssystemkernelebene zugreifen kann, müssen Betriebsystemfunktionen nur einmal entwickelt werden. Die Betriebsystemfunktionen können dann auf anderen Chipkarten, die ebenfalls eine zweite einheitliche Betriebssystemkernelebene aufweisen, ausgeführt werden.

Ein Applikationshersteller kann dann alle Betriebsystemfunktionen auf der Anwendungsebene umsetzten und somit ein Virtuelles Betriebsystem umsetzten, welches auf allen Chipkarten mit einer zweiten einheitlichen Betriebssystemkernelebene und mit einer Schnittstelle zum Zugriff von außerhalb des Betriebssystems auf die zweite einheitliche Betriebssystemkernelebene portierbar ist. Dabei kann die Anwendungsebene ebenfalls auf Java basiert sein oder eine andere Programmiersprache aufweisen.

Falls die Anwendungsebene für das Virtuelle Betriebssystem ebenfalls auf Java basiert, würde die Java Virtual Machine um die zweite einheitliche Betriebssystemkernelebene erweitert.

Durch die zweite einheitliche Betriebssystemkernelebene kann das herstellereigene Betriebssystem einer Chipkarte, das die grundlegenden Funktionen eines Chips steuert, umgangen werden. Diese grundlegenden Funktionen können in der Regel nicht durch die Anwendungsebene erreicht werden, da diese Funktionen zumeist direkt auf der ersten Betriebssystemkernelebene aufsetzen. Um diese aber zu erreichen, ist eine Chipkarte vorteilhaft, bei der die Java-Applikationsebene über die Schnittstelle im Betriebssystem mit der zweiten einheitlichen Betriebssystemkernelebene verbunden ist.

Die Schnittstelle erlaubt den interoperablen Zugriff der Anwendungsebene auf das Betriebssystem bzw. auf die Funktionalitäten des Betriebssystems. Die Schnittstelle ist dabei insbesondere als Programmierungsschnittstelle API (API = Application Programming Interface) ausgebildet bzw. ist mit der Schnittstelle im Betriebssystem verbunden. Diese realisiert den interoperablen Zugriff auf die herstellereigenen Betriebssystemmerkmale. Hierdurch können die herstellereigenen Betriebssystemmerkmale genutzt werden. Die Programmierungsschnittstelle definiert die Kommandos, durch die ein Entwickler einheitliche Betriebssystemkernelmerkmale programmieren kann, wobei interoperable Regel, Variablen und Logiken von der Programmierschnittstelle der zweiten einheitlichen Betriebssystemkernelebene genutzt werden. Die virtuellen Betriebssystemmerkmale können kleine Standardanwendungen sein, die die Programmierungsschnittstelle nutzen, um Einfluss bzw. Zugriff auf das vom Chipkartenhersteller vorgegebene Betriebssystem zu haben.

Die zweite einheitliche Betriebssystemkernelebene der Chipkarte kann neben der Java Virtual Machine existieren. Bevorzugt ist jedoch eine Chipkarte, bei der die zweite einheitliche Betriebssystemkernelebene in der zumindest einen Java Virtual Maschine implementiert ist. Hierdurch kann über die Java Virtual Maschine ein Zugriff auf die Funktionalitäten des Betriebssystems der Chipkarte zugegriffen werden.

Gemäß eines zweiten Aspektes der Erfindung wird die Aufgabe durch ein Verfahren zur softwarebasierten Modifikation einer Chipkarte, insbesondere einer Smartkarte, mit einem auf der Chipkarte implementierten Betriebssystem, welches die Funktionen der Chipkarte steuert, und mit einer ersten Betriebssystemkernelebene, die den Kern des Betriebssystems darstellt und in der die Prozess- und Datenorganisation des Betriebssystems festgelegt ist, wobei über eine Schnittstelle ein Zugriff von außerhalb des Betriebssystems auf eine zweite einheitliche Betriebssystemkernelebene erfolgt, wobei in der zweiten einheitlichen Betriebssystemkernelebene solche Funktionen der ersten Betriebssystemkernelebene definiert sind, die von außerhalb des Betriebssystems adressierbar sind, gelöst.

Ein derartiges Verfahren zur softwarebasierten Modifikation einer Chipkarte gewährleistet die Interoperabilität der Chipkarte und ermöglicht eine herstellerunabhängige Modifizierung des Betriebssystems der Chipkarte. Über die Schnittstelle erfolgt ein Zugriff auf die zweite einheitliche Betriebssystemkernelebene, die in die Chipkarte implementiert ist. Die zweite einheitliche Betriebssystemkernelebene greift auf das Betriebssystem der Chipkarte bzw. auf die Funktionalitäten der Chipkarte zu, d.h., in der zweiten einheitlichen Betriebssystemkernelebene werden die Funktionen, beispielsweise Speichervorgänge, der ersten Betriebssystemkernelebene, die herstellerseitig vorgegeben ist, definiert. Zugriff von außerhalb des Betriebssystems bedeutet, dass beispielsweise über eine Anwendungsebene die Funktionalitäten des Betriebssystems genutzt werden können. Der Vorteil der Implementierung der zweiten einheitlichen Betriebssystemkernelebene, liegt dabei darin, dass ein einheitlicher Zugriff auf die Prozess- und Datenorganisation des Betriebssystems über die Schnittstelle, die auf die zweite einheitliche Betriebssystemkernelebene zugreift, ermöglicht wird. D.h., der Zugriff kann dabei immer gleich erfolgen, da die zweite einheitliche Betriebssystemkernelebene auf unterschiedlichen Chipkarten implementierbar ist. Ein Zugriff nur auf die erste Betriebssystemkernelebene dagegen ist nicht immer mit den gleichen Mitteln, d.h. über eine gleiche Anwendungsebene möglich, da die erste Betriebssystemkernelebene von jedem Hersteller von Chipkarten anderes definiert wird. Durch die Implementierung der zweiten einheitlichen Betriebssystemkernelebene hat ein Anbieter eines Telekommunikationsnetzes die Möglichkeit ein eigenes so genanntes Virtuelles Betriebsystem zu schaffen, durch das er auf jede Chipkarte, auch wenn sie von unterschiedlichen Herstellern fabriziert wurde, gleichartig zugreifen kann, um so die Funktionalitäten des Betriebsystem auf eine einheitliche Weise zu adressieren. Der Zugriff kann dabei über eine Javaapplikation bzw. eine Java Virtual Machine erfolgen.

Grundsätzlich ist die Erfindung nicht auf bestimmte Typen von Chipkarten beschränkt. Vorteilhaft handelt es sich dabei aber um sogenannte Smartkarten.

Die Erfindung wird nachfolgend anhand von möglichen Ausführungsbeispielen unter Bezugnahme auf die beiliegenden Zeichnungen näher erläutert. Dabei zeigen:
- Fig. 1: bekannte Chipkarten mit Betriebssystemkernelebene und Anwendung;
- Fig. 2: bekannte Chipkarten mit Betriebssystemkernelebene, Betriebssystem und Anwendung;
- Fig. 3: eine erfindungsgemäße Chipkarte mit zweiter einheitlicher Betriebssystemkernelebene;
- Fig. 4: eine erfindungsgemäße Chipkarte mit zweiter einheitlicher Betriebssystemkernelebene und Schnittstelle zu Virtuellem Betriebssystem;
- Fig. 5: eine erfindungsgemäße Chipkarte mit zweiter einheitlicher Betriebssystemkernelebene, Schnittstelle zu Virtuellem Betriebssystem sowie Switch.

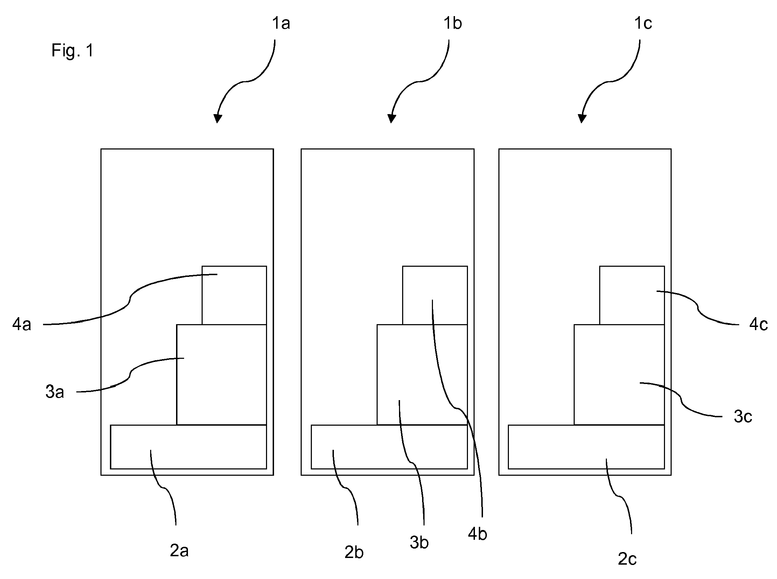

Fig. 1 zeigt schematisch den Aufbau von drei bekannten Chipkarten 1a, 1 b, 1 c von drei verschiedenen Herstellern. Jede der drei Chipkarten 1 a, 1 b, 1 c weist eine eigene erste Betriebssystemkernelebene 2a, 2b, 2c auf, wobei die Betriebssystemkernelebenen 2a, 2b, 2c der drei Chipkarten 1 a, 1 b, 1 c unterschiedlich ausgebildet sind. Um Zugriff auf die Funktionalitäten der ersten Betriebssystemkernelebenen 2a, 2b, 2c zu haben, weist jede Chipkarten 1 a, 1 b, 1 c eine Java Virtual Machine 3a, 3b, 3c auf. Über die jeweilige Java Virtual Machine 3a, 3b, 3c kann eine Anwendung der Anwendungsebene 4a, 4b, 4c auf die Funktionen/Funktionalitäten der ersten Betriebssystemkernelebenen 2a, 2b, 2c der jeweiligen Chipkarte 1 a, 1 b, 1 c zugreifen bzw. mit diesen kommunizieren. Nachteilig ist bei diesen bekannten Chipkarten 1 a, 1 b, 1 c, dass der Zugriff auf die Funktionalitäten der ersten Betriebssystemkernelebenen 2a, 2b, 2c und damit auf das Betriebssystem der Chipkarten 1 a, 1 b, 1 c nicht einheitlich erfolgt, da in jeder Chipkarte 1a, 1 b, 1 c unterschiedliche herstellereigene erste Betriebssystemkernelebenen 2a, 2b, 2c implementiert sind. Ein Anbieter von Chipkarten, wie beispielsweise ein Telekommunikationsnetzbetreiber, der daran interessiert ist mit seiner Software einen immer gleichen Zugriff bzw. eine einheitliche Steuerung der Chipkarte zu haben, müsste daher die Chipkarte nur von einem Hersteller beziehen. Dies würde in eine unerwünscht Abhängigkeit von einem Hersteller führen.

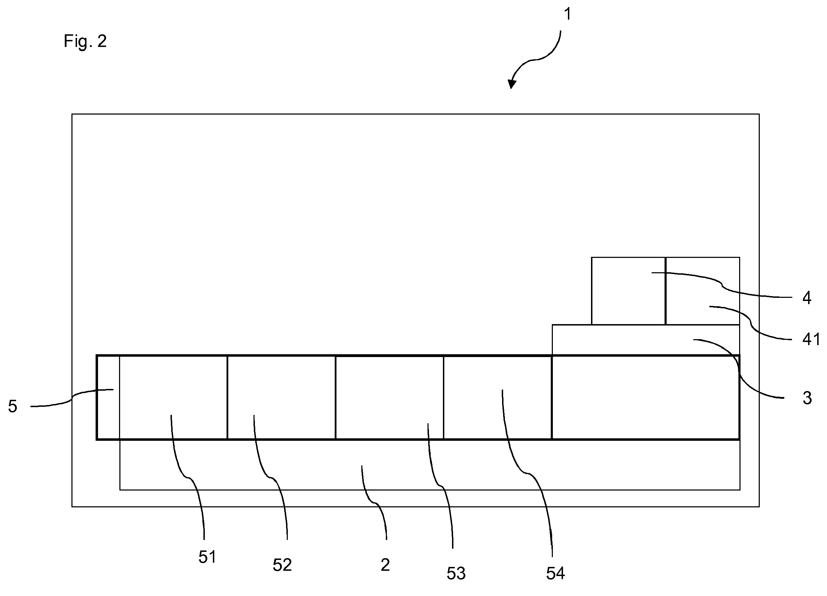

In der Fig. 2 ist der schematische Aufbau einer bekannten Chipkarte 1 mit einer Betriebssystemkernelebene 2, einem Betriebssystem 5 und Anwendungen 41 dargestellt. Ferner weist die dargestellte Chipkarte 1 eine Java Virtual Machine 3 auf, über die Anwendungen 41 der Anwendungsebene 4 auf die Funktionalitäten der ersten Betriebssystemkernelebenen 2 der Chipkarte 1 zugreifen bzw. mit diesen kommunizieren. Neben der Java Virtual Machine 3 weist die Chipkarte 1 ein herstellereigenes Betriebssystem 5 auf, dass die grundlegenden Funktionen, wie beispielsweise das Speichermanagement, der Chipkarte 1 bzw. des Chips der Chipkarte 1 steuert. Diese grundlegenden Funktionen bzw. Funktionalitäten setzen zumeist direkt auf der ersten Betriebssystemkernelebene 2 auf und können daher nachteiligerweise nicht über die Java Virtual Machine 3 durch die Anwendungen 41 der Anwendungsebene 4 erreicht werden.

Bei einigen Herstellern kann es je nach der Implementierung der Java Virtual Machine 3 sein, dass einige Teile des Betriebssystems 5 als Java Applikation umgesetzt wurden, sprich diese Funktionalitäten der ersten Betriebssystemkernelebene 2 bis zur Anwendungsebene 4 reichen. Diese Möglichkeit, die Betriebssystemkernelebene 2 vollständig von den Applikationen der Anwendungsebene 4 aus zu steuern ist jedoch herstellereigen und nicht für jeden unterschiedlichen Hersteller einheitlich definiert. Die Funktionalitäten der Betriebssystems 5 können beispielsweise das Speichermanagement 51, Sicherheitsfunktionen 52, Luftschnittstellen 53 oder weitere Funktionen 54 sein.

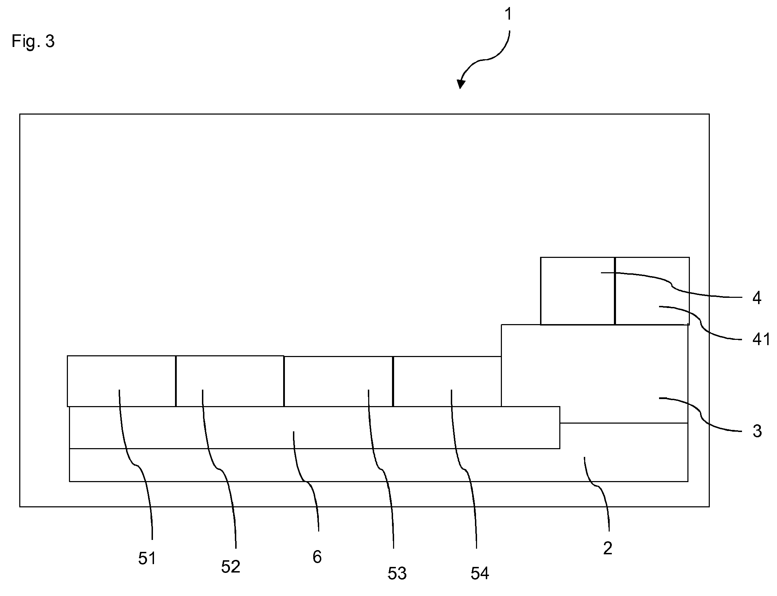

Die Fig. 3 zeigt eine erfindungsgemäße Chipkarte 1 mit zweiter einheitlicher Betriebssystemkernelebene 6. Durch die zusätzliche Implementierung der zweiten einheitlichen Betriebssystemkernelebene 6 wird es ermöglicht zu definieren, welche Funktionen/Funktionalitäten 51, 52, 53, 54 des Betriebssystems der Chipkarte 1 durch die Anwendungen 41 der Anwendungsebene 4 adressierbar sind. Die zweite einheitliche Betriebssystemkernelebene 6 kann dabei neben der Java Virtual Maschine 3 existieren oder einige deren Funktionen, wie beispielsweise das Lesen/Schreiben eines Buffers, mit abdecken. Alle Funktionen der ersten Betriebssystemkernelebene 2 der Chipkarte, die ein Betriebssystem verwendet, sind in der zweiten einheitlichen Betriebssystemkernelebene 6 zu definieren und zu vereinheitlichen. Die Funktionen können beispielsweise Defragmentierungskommandos für das Speichermanagement 51, Sicherheitsfunktionen 52, Luftschnittstellen 53 oder weitere Funktionen 54 sein. Die zweite einheitliche Betriebssystemkernelebene 6 ermöglicht es einem Anbieter von Chipkarten 1, Chipkarten 1 von unterschiedlichen Herstellern mit unterschiedlichen ersten Betriebssystemkernelebenen 2, einheitlich anzusteuern. D.h., durch die zweite einheitliche Betriebssystemkernelebene 6 kann auf die Funktionalitäten 51, 52, 53, 54 des Betriebssystems 5 von unterschiedlichen Chipkarten 1 einheitliche zugegriffen werden bzw. die Funktionalitäten des Betriebssystems 5 können einheitlich durch Anwendungen 41 der Anwendungsebene 4 adressiert werden.

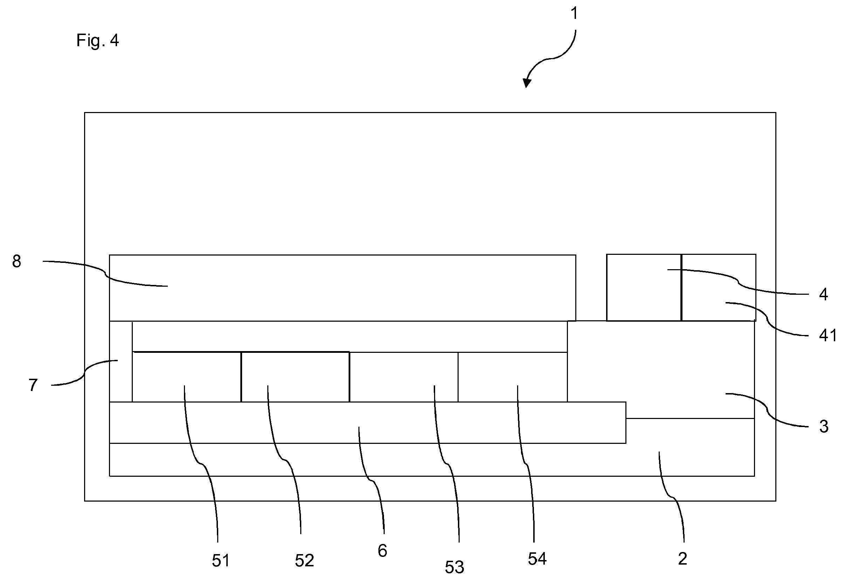

Damit Betriebssystemfunktionalitäten einmal entwickelt werden können und einheitlich auf unterschiedlichen Chipkarten 1 ausgeführt werden können, ist eine Schnittstelle 7 zu dem implementierten zweiten einheitlichen Betriebssystemkernelebene 6 vorgesehen, siehe Fig. 4. Ein Applikationshersteller kann alle Betriebssystemfunktionalitäten auf der Anwendungsebene 4 und somit ein Virtuelles Betriebssystem 8 umsetzen, welches auf allen unterschiedlichen Chipkarten 1, 1a, 1 b, 1 c mit implementierter zweiter einheitlicher Betriebssystemkernelebene 6 und entsprechender Schnittstelle 7 portierbar ist. Die Schnittstelle 7 stellt somit eine Art Tunnel zwischen dem Virtuellen Betriebssystem 8 und der zweiten einheitlichen Betriebssystemkernelebene 6 dar. Das Virtuelle Betriebssystem 8 kann dabei auf Java basiert sein, aber auch einer anderen Programmiersprache folgen.

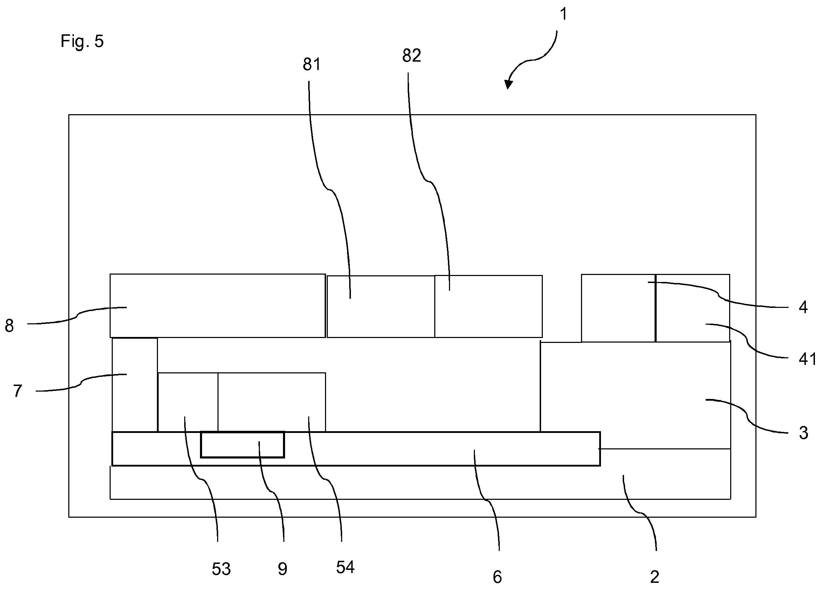

In der Fig. 5 ist eine weitere Ausführungsform der erfindungsgemäßen Chipkarte 1 dargestellt. Die Chipkarte 1 weist eine zweite einheitliche Betriebssystemkernelebene 6, eine Schnittstelle 7 zwischen der zweiten einheitlichen Betriebssystemkernelebene 6 zu einem Virtuellem Betriebssystem 8 sowie einen adressierbaren Switch 9 auf. Der adressierbare Switch 9 ist bevorzugt in der zweiten, einheitlichen Betriebssystemkernelebene 6 vorgesehen. Der Switch 9 ermöglicht eine Auswahl, ob eine Betriebsystemfunktionalität auf der Basis des Betriebssystems 5 des Herstellers der Chipkarte 1 oder auf Basis eines über die Schnittstelle 7 implementierten Virtuellen Betriebssystems 8 ausgeführt werden soll. So können das Speichermanagement 81 und die Sicherheitsfunktionen 82 auf Basis des Virtuellen Betriebssystems 8 ausgeführt werden und die Luftschnittstelle 53 und andere Funktionen 54 auf Basis der Betriebssystems 5 des Herstellers der Chipkarte 1 ausgeführt werden. Für den Fall, dass über das Virtuelle Betriebssystem 8 Zugriff auf die Funktionalitäten des Chips der Chipkarte 1 erfolgt, deaktiviert das vom Hersteller vorgegebene Betriebssystem 5 seine eigene Betriebssystemfunktionalitäten, welche die gleichen rudimentären Kommandos benutzen. Falls einige Funktionalitäten des Virtuellen Betriebssystems 8 gelöscht werden, die auf die Funktionalitäten des Chips zugreifen, aktiviert das Betriebssystem seine eigenen Betriebssystemfunktionalitäten. Hierzu ist der adressierbare Switch 9 in dem Betriebsystem der Chipkarte, insbesondere in der ersten und/oder zweiten Betriebssystemkernelebene 2, 6 implementiert.

### Bezugszeichen liste

1, 1a, 1b, 1c Chipkarte
2, 2a, 2b, 2c erste Betriebssystemkernelebene
3, 3a, 3b, 3c Java Virtual Machine
4, 4a, 4b, 4c Anwendungen
5 Betriebssystem
6 zweite einheitliche Betriebssystemkernelebene
7 Schnittstelle (Tunnel)
8 Virtuelles Betriebssystem
9 Switch
41 weitere Anwendung
51, 52, 53,54Funktionalitäten des Betriebssystems
81, 82 Funktionalitäten des Virtuellen Betriebssystems

## Patentansprüche

1. Chipkarte (1, 1a, 1 b, 1 c), insbesondere Smartkarte, mit einem auf der Chipkarte (1, 1a, 1 b, 1 c) implementierten Betriebssystem (5), welches die Funktionen der Chipkarte (1, 1a, 1 b, 1 c) steuert und welches insbesondere ein vom Hersteller der Chipkarte (1) vorgegebenes Betriebssystem (5) ist, und mit einer ersten Betriebssystemkernelebene (2, 2a, 2b, 2c), die den Kern des Betriebssystems (5) darstellt und in der die Prozess- und Datenorganisation des Betriebssystems (5) festgelegt ist, **dadurch gekennzeichnet, dass** eine zweite, einheitliche Betriebssystemkernelebene (6) vorgesehen ist, in welcher solche Funktionen der ersten Betriebssystemkernelebene (2) definiert sind, die von außerhalb des Betriebssystems (5) adressierbar sind, und dass eine Schnittstelle (7) zum Zugriff von außerhalb des Betriebssystems (5) auf die zweite einheitliche Betriebssystemkernelebene (6) vorgesehen ist.

2. Chipkarte nach Anspruch 1, **dadurch gekennzeichnet, dass** die Schnittstelle (7) im Betriebssystem (5) der Chipkarte (1) implementiert ist.

3. Chipkarte nach Anspruch 1 oder 2, **dadurch gekennzeichnet, dass** auf der Chipkarte (1) ein von außen adressierbares, über die Schnittstelle (7) implementiertes Virtuelles Betriebssystem (8) vorgesehen ist.

4. Chipkarte nach Anspruch 3, **dadurch gekennzeichnet, dass** die Schnittstelle (7) eine Art Tunnel zwischen dem Virtuellen Betriebssystem (8) und der zweiten einheitlichen Betriebssystemkernelebene (6) darstellt.

5. Chipkarte nach einem der Ansprüche 1 bis 4, **dadurch gekennzeichnet, dass** ein adressierbarer Switch (9) in dem Betriebssystem (5), insbesondere in der zweiten, einheitlichen Betriebssystemkernelebene (6), vorgesehen ist.

6. Chipkarte nach Anspruch 5, soweit auf Anspruch 3 rückbezogen, **dadurch gekennzeichnet, dass** der Switch (9) adressierbar ist, um zu definieren, ob eine Betriebssystemfunktion auf Basis des Virtuellen Betriebssystems (8) oder des vorgegebenen Betriebssystems (5) auszuführen ist.

7. Chipkarte nach Anspruch 5 oder 6, soweit auf Anspruch 3 rückbezogen, **dadurch gekennzeichnet, dass** der Switch (9) einen Schalter darstellt, durch den eine Umschaltung dahingehend erfolgen kann, ob eine Betriebssystemfunktion auf der Basis des Betriebssystems (5) oder auf Basis des über die Schnittstelle (7) implementierten Virtuellen Betriebssystems (8) ausgeführt werden soll.

8. Chipkarte nach einem der Ansprüche 1 bis 7, **dadurch gekennzeichnet, dass** die Chipkarte (1) javabasiert ist, dass die Chipkarte (1) zumindest eine Java Virtual Maschine (3) aufweist und dass die Chipkarte (1) eine Java-Applikationsebene aufweist.

9. Chipkarte nach Anspruch 8, **dadurch gekennzeichnet, dass** die Java-Applikationsebene über die Schnittstelle (7) im Betriebssystem (5) mit der zweiten, einheitlichen Betriebssystemkernelebene (6) verbunden ist.

10. Chipkarte nach Anspruch 9, **dadurch gekennzeichnet, dass** wenigstens eine Programmierungsschnittstelle vorgesehen ist, und dass die Schnittstelle (7) im Betriebssystem (5) als die Programmierungsschnittstelle ausgebildet ist, oder dass die Programmierungsschnittstelle die mit der Schnittstelle (7) im Betriebssystem (5) verbunden ist.

11. Chipkarte nach einem der Ansprüche 8 bis 10, **dadurch gekennzeichnet, dass** die zweite, einheitliche Betriebssystemkernelebene (6) in der zumindest einen Java Virtual Maschine (3) implementiert ist.

12. Verfahren zur softwarebasierten Modifikation einer Chipkarte, insbesondere einer Smartkarte, mit einem auf der Chipkarte implementierten Betriebssystem, welches die Funktionen der Chipkarte steuert und welches insbesondere ein vom Hersteller der Chipkarte vorgegebenes Betriebssystem ist, und mit einer ersten Betriebssystemkernelebene, die den Kern des Betriebssystems darstellt und in der die Prozess- und Datenorganisation des Betriebssystems festgelegt ist, **dadurch gekennzeichnet, dass** über eine Schnittstelle ein Zugriff von außerhalb des Betriebssystems auf eine zweite einheitliche Betriebssystemkernelebene erfolgt, wobei in der zweiten, einheitlichen Betriebssystemkernelebene solche Funktionen der ersten Betriebssystemkernelebene definiert sind, die von außerhalb des Betriebssystems adressierbar sind.

13. Verfahren nach Anspruch 12, **dadurch gekennzeichnet, dass** über die Schnittstelle ein von außen adressierbares Virtuelles Betriebssystem auf der Chipkarteimplementiert wird.

14. Verfahren nach Anspruch 13, **dadurch gekennzeichnet, dass** in dem Betriebssystem, insbesondere in der zweiten einheitlichen Betriebssystemkernelebene, ein adressierbarer Switch vorgesehen ist, und dass der Switch eine Auswahl ermöglicht, ob eine Betriebssystemfunktionalität auf Basis des Betriebssystems oder auf Basis des über die Schnittstelle implementierten Virtuellen Betriebssystems ausgeführt werden soll und/oder dass der Switch eine Art Schalter darstellt, durch den eine Umschaltung dahingehend erfolgen kann, ob eine Betriebssystemfunktion auf der Basis des Betriebssystems oder auf Basis des über die Schnittstelle implementierten Virtuellen Betriebssystems ausgeführt werden soll..

15. Verfahren nach Anspruch 14, **dadurch gekennzeichnet, dass** die Chipkarte einen Chip aufweist, wobei die grundlegenden Funktionen des Chips über das Betriebssystem gesteuert werden, dass für den Fall, dass über das Virtuelle Betriebssystem Zugriff auf die Funktionalitäten des Chips der Chipkarte erfolgt, das Betriebssystem seine eigenen Betriebssystemfunktionalitäten deaktiviert, die die gleichen rudimentären Kommandos benutzen und/oder dass, falls einige Funktionalitäten des Virtuellen Betriebssystems gelöscht werden, die auf die Funktionalitäten des Chips zugreifen, das Betriebssystem seine eigenen Betriebssystemfunktionalitäten aktiviert, die die gleichen rudimentären Kommandos benutzen.
